# EUROPEAN PATENT APPLICATION

(11) **EP 4 759 564 A1**
(43) Date of publication of application: **17.06.2026**
(21) Application number: 25216888.5
(22) Date of filing: 19.11.2025
(51) Int. Cl.: B60C 11/11, B60C 11/03

(54) **MOTORCYCLE TIRE**

(30) Priority: 16.12.2024 JP 2024220334; 16.12.2024 JP 2024220336
(71) Applicant: Sumitomo Rubber Industries Ltd., Kobe-shi, Hyogo 651-0072 (JP)
(72) Inventor: KASAI, ANJU, KOBE-SHI, 6510072 (JP); MIHARA, TAKUYA, KOBE-SHI, 6510072 (JP); YAMAZOE, SHOHEI, KOBE-SHI, 6510072 (JP); UEDA, YOSHIMASA, KOBE-SHI, 6510072 (JP)
(74) Representative: Plasseraud IP

(57) **Abstract**

A motorcycle tire (1) includes crown blocks (4) including first crown blocks (6) and second crown blocks (7). Each of the first crown blocks (6) has a heel-side edge (11) formed in a V-shape and inclined at an angle (α1) of 10 to 45 degrees on both axial sides with respect to the tire axial direction. A total number of the first crown blocks (6) is in the range from 30% to 70% of a total number of the crown blocks (4). Each of the second crown blocks (7) has a second ground contacting surface shape (7a) having a maximum length (WC) in the tire axial direction smaller than a maximum length (W1) in the tire axial of the first ground contacting surface shape (6a) of each of the first crown blocks (6).

## Description

### RELATED APPLICATIONS

This application claims the benefit of foreign priority to Japanese Patent Application No. JP2024-220334, filed December 16, 2024, and Japanese Patent Application No. JP2024-220336, filed December 16, 2024, which are incorporated by reference in their entirety.

### FIELD OF THE INVENTION

The present invention relates to a motorcycle tire.

### BACKGROUND OF THE INVENITON

Japanese Unexamined Patent Application Publication No. 2016-060347 discloses a pneumatic motorcycle tire for running on rough terrain provided with a plurality of blocks. The blocks include a plurality of crown blocks and a plurality of middle blocks. Each of the crown blocks has an axially elongated block main body and a protruding portion protruding from the block main body to a toe-side (trailing side) in a tire rotational direction. In a block group consisting of one crown block and a pair of middle blocks arranged on both sides of the crown block closest to the crown block, the center of gravity of the crown block is located on the toe-side in the rotational direction of each of the middle blocks.

### SUMMARY OF THE INVENTION

Generally, motorcycle tires for running on rough terrain require traction during straightaway driving by shearing mud and other debris on the road surface with edges on a heel-side (leading side) in the tire rotational direction of the blocks. However, since the motorcycle needs to roll during cornering, simply increasing the traction causes the motorcycle to slide while rolling, which makes it difficult to control the motorcycle's posture.

The present invention was made in view of the above, and a primary object thereof is to provide a motorcycle tire capable of suppressing a large decrease in slide control performance during cornering while improving traction performance.

The present invention is a motorcycle tire for running on rough terrain including:
a tread portion bound with an intended tire rotational direction, wherein
in a tread development view, the tread portion includes a pair of tread edges, a tread width, a crown region, a pair of shoulder regions, a pair of middle regions, and a plurality of blocks,
the tread width is a distance in a tire axial direction from one of the tread edges to the other of the tread edges,
the crown region is an area extending over 40% of the tread width with an axial center thereof at the tire equator,
each of the shoulder regions is an area extending over 10% of the tread width from a respective one of the tread edges,
each of the middle regions is an area demarcated between the crown region (Cr) and a respective one of the shoulder regions,
the blocks include a plurality of crown blocks each having a center of gravity of a ground contacting surface thereof located in the crown region, and a plurality of middle blocs each having a center of gravity of a ground contacting surface thereof located in a respective one of the middle regions,
the crown blocks include a plurality of first crown blocks each having a first ground contacting surface shape and a plurality of second crown blocks each having a second ground contacting surface shape,
the first ground contacting surface shape has a V-shape in which at least a heel-side edge thereof on a heel-side in the tire rotational direction is inclined to the heel-side in the tire rotational direction as it goes from a center thereof in the tire axial direction toward both outer sides thereof in the tire axial direction,
the second ground contacting surface shape has a maximum length (WC) in the tire axial direction smaller than a maximum length (W1) in the tire axial direction of the first ground contacting surface shape,
a total number of the first crown blocks is in the range from 30% to 70% of a total number of the crown blocks, and
the heel-side edge of the first ground contacting surface shape is inclined at an angle in the range of 10 to 45 degrees with respect to the tire axial direction.

By employing the above-described configuration, it is possible that the motorcycle tire of the present invention suppresses a large decrease in the slide control performance while improving the traction performance.

### BRIEF DESCRIPTION OF THE DRAWINGS

FIG. 1 is a tread development view showing an embodiment of a motorcycle tire of the present invention.
FIG. 2 is a cross-sectional view taken along A-A line of FIG. 1.
FIG. 3 is an enlarged view of FIG. 1.
FIG. 4 is a cross-sectional view taken along B-B line of FIG. 3.
FIG. 5 is an enlarged view of FIG. 1.
FIG. 6 is a cross-sectional view taken along C-C line of FIG. 5.
FIG. 7 is a tread development view showing another embodiment of the motorcycle tire of the present invention.

### DETAILED DESCRIPTION OF THE INVENTION

An embodiment of the present invention will now be described in conjunction with accompanying drawings. It should be understood that the drawings may contain exaggerated representations and representations that differ from the dimensional ratios of the actual structure in order to aid in understanding the present invention. Further, in case of multiple embodiments, identical or common elements are assigned with the same reference signs throughout the embodiments, and redundant explanations may be omitted. Furthermore, the specific configurations shown in the embodiments and the drawings are intended to aid in understanding the contents of the present invention. Therefore, the present invention is not limited to the specific configurations illustrated.

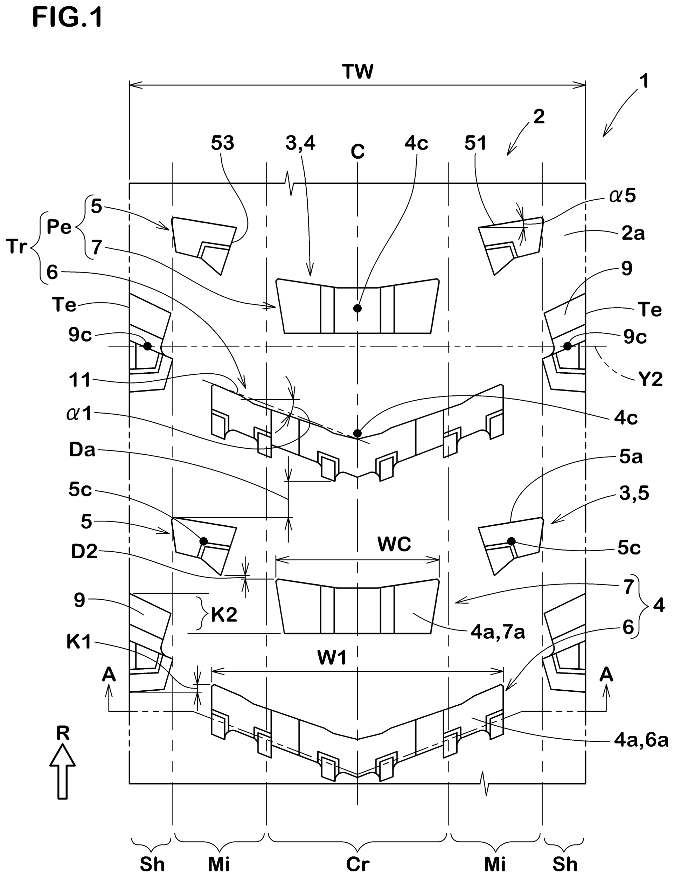

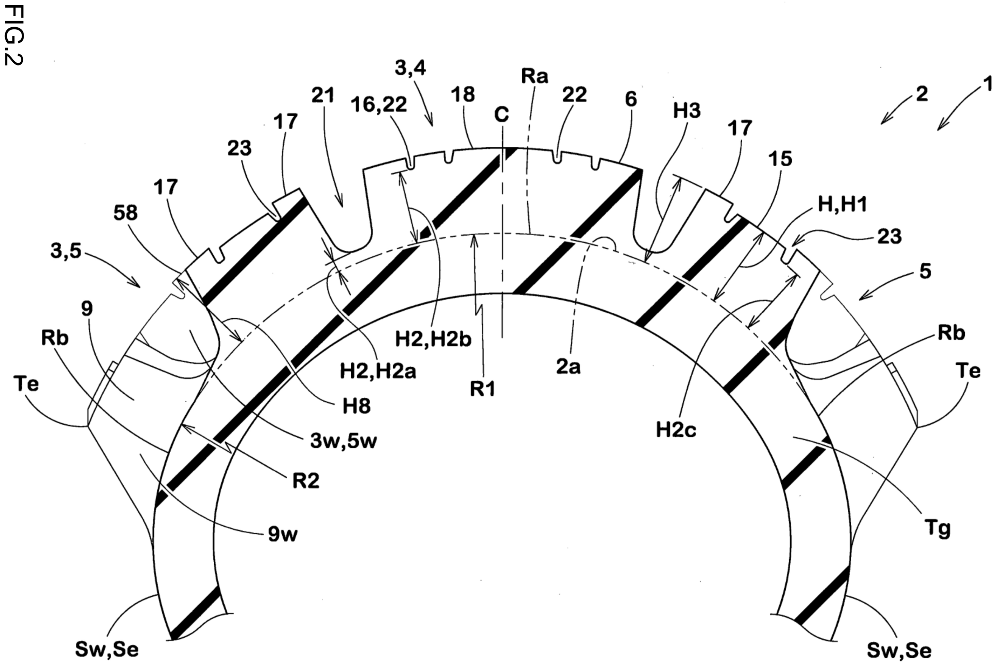

FIG. 1 is a development view (tread development view) of a tread portion 2 of a motorcycle tire 1 for running on rough terrain driving (hereinafter, may be simply referred to as a "tire 1") according to the present embodiment. FIG. 2 is a cross-sectional view taken along A-A line of FIG. 1. FIG. 2 shows a tire meridian cross section of the tire 1. Further, FIG. 1 and FIG. 2 show the tire 1 in a standard state. In the case of a tire for which various standards have been established, the "standard state" refers to a state in which the tire 1 is mounted on a standard rim (not shown), inflated to a standard inner pressure, and loaded with no tire load. In the case of a tire for which various standards have not been established, the standard state means a standard use state according to the purpose of use of the tire and being loaded with no tire load. In the present specification, unless otherwise noted, dimensions of various parts of the tire are values measured under the standard state.

The "standard rim" refers to a wheel rim specified for the concerned tire by a standard included in a standardization system on which the tire is based, for example, the "normal wheel rim" in JATMA, "Design Rim" in TRA, and "Measuring Rim" in ETRTO.

The "standard inner pressure" refers to air pressure specified for the concerned tire by a standard included in a standardization system on which the tire is based, for example, the maximum air pressure in JATMA, the maximum value listed in the "TIRE LOAD LIMITS AT VARIOUS COLD INFLATION PRESSURES" table in TRA, and "INFLATION PRESSURE" in ETRTO.

The tire 1 of the present embodiment is suitable for use as a tire for motocross racing, for example. The tire 1 of the present embodiment is suitably used as a rear tire for a motocross vehicle, for example. However, the tire 1 is not limited to use in motocross racing.

As shown in FIG. 1 or FIG. 2, the outer surface of the tread portion 2 of the present embodiment is curved in an arc shape convex outward in the tire radial direction in a tire meridian cross section. In addition, the tread portion 2 is bound with an intended tire rotational direction (R) (hereinafter may simply be referred to as the "rotational direction (R)").

In the tread development view, in the present embodiment, the tread portion 2 includes a pair of tread edges (Te) and a tread width (TW), which is a distance in the tire axial direction between the tread edges (Te).

Further, the tread portion 2 includes a crown region (Cr), a pair of shoulder regions (Sh), and a pair of middle regions (Mi). The crown region is an area having an axial center thereof at the tire equator (C) and extending over 40% of the tread width (TW) (i.e., having an axial length of 40% of the tread width (TW)). Each of the shoulder regions (Sh) is an area extending over 10% of the tread width (TW) (i.e., having an axial length of 10% of the tread width (TW)) from a respective one of the tread edges (Te). Each of the middle regions (Mi) is an area demarcated between the crown region (Cr) to a respective one of the shoulder regions (Sh). The crown region (Cr) is an area that comes into contact with the road surface during straightaway driving but does not come into contact with the road surface during cornering with a large camber angle. The shoulder regions (Sh) are areas that do not come into contact with the road surface during straightaway driving but come into contact with the road surface during cornering with a large camber angle. The middle regions (Mi) are areas that does not come into contact with the road surface during straightaway driving but come into contact with the road surface during cornering.

Furthermore, the tread portion 2 includes a plurality of blocks 3. The blocks 3 includes a plurality of crown blocks 4 and a plurality of middle blocks 5. Each of the crown blocks 4 has a ground contacting surface (4a) having a center of gravity (centroid) (4c) located in the crown region (Cr). Each of the middle block 5 has a ground contacting surface (5a) having a center of gravity (5c) located in a respective one of the middle regions (Mi). It should be noted that the tread edges (Te) refer to the axially outer edges of the blocks that are positioned axially outermost among the blocks 3 arranged on the tread portion 2.

The crown blocks 4 include a plurality of first crown blocks 6 each having a first ground contacting surface shape (6a) and a plurality of second crown blocks 7 each having a second ground contacting surface shape (7a). The first crown blocks 6 and the second crown blocks 7 have different ground contacting surface shapes.

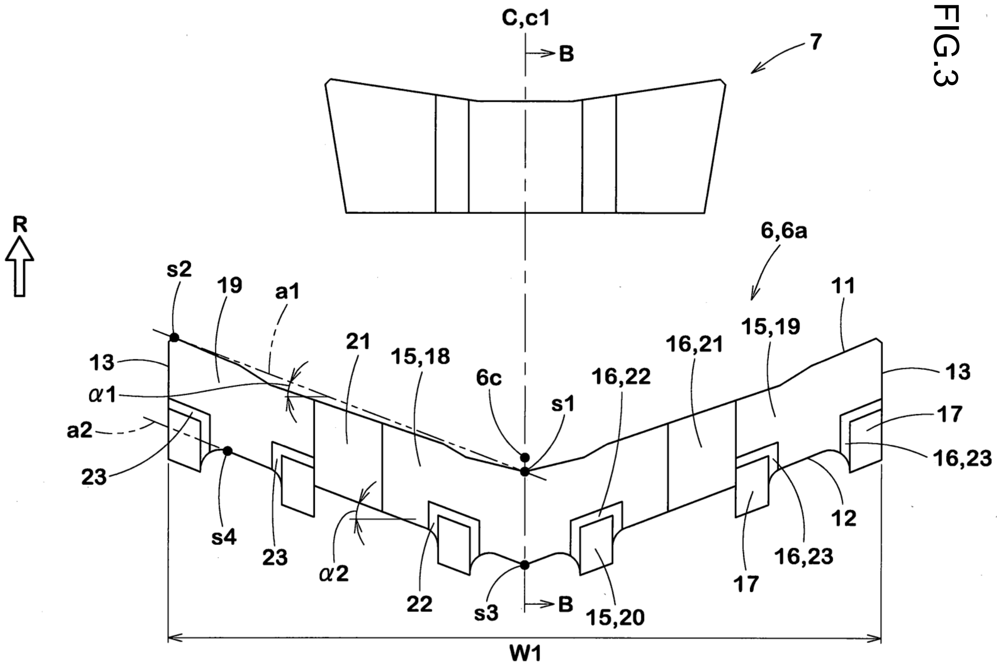

The first ground contacting surface shape (6a) has a V-shape in which at least a heel-side edge 11 on the heel-side in the rotational direction (R) is inclined toward the heel-side in the rotational direction (R) as it goes from the center in the tire axial direction toward both axially outer sides. Further, the heel-side edge 11 of the first ground contacting surface shape (6a) is inclined at an angle (α1) of 10 degrees or more with respect to the tire axial direction on both axial sides of the V-shape. The heel-side edge 11 configured as such increases scratching force against mud in the crown region (Cr) where a relatively large ground contact pressure occurs, which effectively increases shearing force and thus improves the traction performance. In order to further improve the traction performance, the angle (α1) is preferably 15 degrees or more, and more preferably 20 degrees or more. It should be noted that the angle (α1) of the heel-side edge 11 is specified by a virtual linear line (a1) (shown in FIG. 3). As shown in FIG. 3, the virtual linear line (a1) is a linear line connecting an intersection point (s1) and a first point (s2) on the heel-side edge 11 where the angle (α1) is largest. The intersection point (s1) is a point where a tire circumferential direction line (c1) passing through a center of gravity (6c) of the first ground contacting surface shape (6a) intersects with the heel-side edge 11. It should be noted that the angles of other heel-side edges, which will be described later, are also determined in the same manner. Furthermore, in the present specification, the angles of heel-side edges and angles of toe-side edges (described later) are defined as positive when they are inclined to the heel-side in the rotational direction (R) as they go from the tire equator (C) to a respective one of the tread edges (Te).

Further, the angle (α1) of the heel-side edge 11 of the first ground contacting surface shape (6a) is 45 degrees or less. Therefore, excessive increases in the shearing force in the crown region (Cr) is suppressed, thereby, the slide control performance is maintained high. In order to maintain the slide control performance even higher, the angle (α1) is preferably 35 degrees or less, and more preferably 25 degrees or less, in combination with any of the above-mentioned lower limit values. As an example, the angle (α1) is preferably in the range from 15 to 35 degrees, and more preferably in the range from 20 to 25 degrees.

The total number of the first crown blocks 6 is 30% or more of the total number of the crown blocks 4. Therefore, the first crown blocks 6 sufficiently improve the traction performance. In order to further improve the traction performance, it is preferred that the total number of the first crown blocks 6 is 40% or more of the total number of the crown blocks 4. Furthermore, since the total number of the first crown blocks 6 is 70% or less of the total number of the crown blocks 4, the shearing force of the heel-side edges 11 of the first crown blocks 6 is prevented from becoming excessively large, and thus the slide control performance is maintained high. From this point of view, it is preferred that the total number of the first crown blocks 6 is 60% or less in combination with any of the lower limit values mentioned above. As an example, the total number of the first crown blocks 6 is preferably in the range from 30% to 70%, more preferably in the range from 40% to 60%, of the total number of crown blocks 4, and 50% in the present embodiment of the total number of crown blocks 4. In the present embodiment, the first crown blocks 6 and the second crown blocks 7 are arranged alternately, one by one in the present embodiment, in the tire circumferential direction.

Further, the second ground contacting surface shape (7a) of each of the second crown blocks 7 has a maximum length (WC) in the tire axial direction smaller than that of the first ground contacting surface shape (6a). The second ground contacting surface shape (7a) configured as such moderately decreases the lateral rigidity of the crown region (Cr).

As shown in FIG. 2, in the present specification, one block 3 is defined as a protrusion extending continuously with a protruding height (H) of 1.5 mm or more from a tread reference surface (2a). The tread reference surface (2a) in the present embodiment is a surface formed by smoothly connecting outer surfaces (Se) of a pair of sidewall portions (Sw), and is the surface that forms the basis for the protrusions of the blocks 3. The tread reference surface (2a) in the present embodiment is formed by a first arc (Ra) with a radius (R1) passing through the tire equator (C) and a pair of second arcs (Rb) each having a radius (R2) smaller than the radius (R1) and smoothly connected to the first arc (Ra). Each of the tread edges (Te) is located on a normal line of a respective one of the second arcs (Rb). Further, each of the "ground contacting surfaces" is the outer surface of a respective one of the blocks 3, excluding a wall surface (3w) thereof. The wall surface (3w) is a surface extending in the protruding height direction from the tread reference surface (2a). FIG. 2 shows wall surfaces (5w) of middle blocks 5 described below and wall surfaces (9w) of shoulder blocks 9 described below. The "ground contacting surface" of each of the first ground contacting surface shape (6a) and the second ground contacting surface shape (7a) (shown in FIG. 1) also has the same meaning as the aforementioned ground contacting surface. Furthermore, each "edge" in the present specification refers to an outer edge of a respective one of the ground contacting surfaces that appears in the tread development view.

As shown in FIG. 1, it is preferred that each of the first crown blocks 6 (the first ground contacting surface shape (6a)) has a maximum length (W1) in the tire axial direction in the range from 60% to 70% of the tread width (TW). Since the maximum length (W1) of each of the first crown blocks 6 is 60% or more, the scratching force on the mud can be increased. In order to further increase such a scratching force, the maximum length (W1) of each of the first crown blocks 6 is preferably 62% or more, and more preferably 64% or more of the tread width (TW). Since the maximum length (W1) of each of the first crown blocks 6 is 70% or less of the tread width (TW), the lateral rigidity of the first crown blocks 6 is prevented from becoming excessively large, therefore, the slide control performance is maintained high. In order to effectively exert such an effect, the maximum length (W1) of each of the first crown blocks 6, in combination with any of the lower limit values mentioned above, is preferably 68% or less, and more preferably 66% or less of the tread width (TW). As an example, the maximum length (W1) of each of the first crown blocks 6 is preferably from 62% to 68%, and more preferably from 64% to 66% of the tread width (TW).

FIG. 3 is an enlarged partial view of FIG. 1. As shown in FIG. 3, each of the first crown blocks 6 includes the heel-side edge 11, a toe-side edge 12 that extends in the tire axial direction and is spaced apart from the heel-side edge 11 in the tire circumferential direction, and a pair of joint edges 13 each connecting the heel-side edge 11 and the toe-side edge 12. The heel-side edge 11 extends in a zigzag shape, for example. The intersection point (s1) of the heel-side edge 11 is located on the tire equator (C). The toe-side edge 12 extends in a ridge shape with a larger amplitude than the heel-side edge 11, for example. The toe-side edge 12 in the present embodiment extends in a V-shape as a whole. Each of the joint edges 13 extends parallel to the tire circumferential direction, for example.

The toe-side edge 12 has an angle (α2) with respect to the tire axial direction on both axial sides of the V-shape. The angle (α2) of the toe-side edge 12 is preferably 10 degrees or more, more preferably 15 degrees or more, and is preferably 45 degrees or less, and even more preferably 35 degrees or less. Furthermore, the absolute value |α1-α2| of the difference between the angle (α1) of the heel-side edge 11 and the angle (α2) of the toe-side edge 12 is preferably 20 degrees or less, and more preferably 10 degrees or less. The angle (α2) is determined by a virtual linear line (a2) connecting a second point (s4) on the toe-side edge 12 where the angle (α2) is largest and an intersection point (s3) between the toe-side edge 12 and the tire circumferential direction line (c1) passing through the center of gravity (6c) of the first ground contacting surface shape (6a). The angles of the other toe-side edges, which will be described later, are similar. The center of gravity (6c) of the first ground contacting surface shape (6a) is located on the tire equator (C) in the present embodiment. As an example, the angle (α2) is preferably from 10 to 45 degrees, and more preferably from 15 to 35 degrees.

As shown in FIG. 2 or FIG. 3, the first ground contacting surface shape (6a) of each of the first crown blocks 6 includes first ground contacting surface portions 15, second ground contacting surface portions 16, and third ground contacting surface portions 17. Each of the first ground contacting surface portions 15 is formed with a first protruding height (H1). Each of the second ground contacting surface portions 16 is formed with a second protruding height (H2) that is smaller than the first protruding height (H1). Each of the third ground contacting surface portions 17 is formed with a third protruding height (H3) that is greater than the first protruding height (H1). Further, the first ground contacting surface portions 15 include a central portion 18 located on the tire equator (C), a pair of outer portions 19 located at both axial ends, one on each end, of the first ground contacting surface shape (6a), and toe-side portions 20 arranged on the toe-side of the central portion 18 in the rotational direction (R). The second ground contacting surface portions 16 include a pair of first portions 21, a pair of second portions 22, and a plurality of third portions 23. Each of the first portions 21 is located between the central portion 18 and a respective one of the outer portions 19 and is formed in a rectangular shape in the tread development view. Each of the second portions 22 is disposed between the central portion 18 and a respective one of the toe-side portions 20 and is formed in a U-shape in the tread development view. Each of the third portions 23 is connected to a respective one of the outer portions 19 and is formed in an L-shape in the tread development view. The third portions 23 are arranged on the toe-side of the outer portions 19 in the rotational direction (R). Each of the first portions 21 is formed to have a second protruding height (H2a) smaller than a second protruding height (H2b) of each of the second portions 22, for example. The second protruding height (H2a) of each of the first portions 21 is smaller than a second protruding height (H2c) of each of the third portions 23, for example. The second protruding height (H2b) of each of the second portions 22 is the same as the second protruding height (H2c) of each of the third portions 23, for example. Each of the third ground contacting surface portions 17 is connected to a respective one of the third portions 23 and is formed in a rectangular shape in the tread development view. The toe-side portions 20 and the third ground contacting surface portions 17 protrude to the toe-side in the rotational direction (R) beyond the virtual line (a2). In other words, the first, second, and third ground contacting surface portions are classified based on the protruding height from the tread reference surface (2a). The first, second, and third portions are parts of the second ground contacting surface portion 16, with the first portions 21 each forming a relatively large groove portion, the second portions 22 each being a U-shaped narrow groove portion separating a respective one of the toe-side portions 20 of the first ground contacting surface portion 15 from the central portion 18, and the third portions 23 each being an L-shaped narrow groove portion separating a respective one of the third ground contacting surface portions 17 from a respective one of the outer portions 19 of the first ground contacting surface portion 15.

The first protruding height (H1) is preferably 10 mm or more, more preferably 12 mm or more, and is preferably 18 mm or less, and even more preferably 16 mm or less, for example. The second protruding height (H2a) of the first portions 21 is preferably 1.5 mm or more, more preferably 2.0 mm or more, and is preferably 4.0 mm or less, and more preferably 3.0 mm or less. A difference (H1-H2b) between the second protruding height (H2b) of the second portions 22 and the first protruding height (H1) is preferably 1.0 mm or more, more preferably 1.5 mm or more, and is preferably 3.0 mm or less, and more preferably 2.5 mm or less. A difference (H1-H2c) between the second protruding height (H2c) of the third portions 23 and the first protruding height (H1) is preferably 1.0 mm or more, more preferably 1.5 mm or more, and is preferably 3.0 mm or less, and even more preferably 2.5 mm or less. A difference (H3-H1) between the third protruding height (H3) and the first protruding height (H1) is preferably 0.5 mm or more, more preferably 1.0 mm or more, and is preferably 2.0 mm or less, and even more preferably 1.5 mm or less. As an example, the first protruding height (H1) is preferably in the range from 10 to 18 mm, and more preferably in the range from 12 to 16 mm. Further, the second protruding height (H2a) of the first portions 21 is preferably in the range from 1.5 to 4.0 mm, more preferably in the range from 2.0 to 3.0 mm. The difference (H1-H2b) between the second protruding height (H2b) of the second portions 22 and the first protruding height (H1) is preferably in the range from 1.0 to 3.0 mm, more preferably in the range from 1.5 to 2.5 mm. The difference (H1-H2c) between the second protruding height (H2c) of the third portions 23 and the first protruding height (H1) is preferably in the range from 1.0 to 3.0 mm, more preferably in the range from 1.5 to 2.5 mm. The difference (H3-H1) between the third protruding height (H3) and the first protruding height (H1) is preferably in the range from 0.5 to 2.0 mm, more preferably in the range from 1.0 to 1.5 mm.

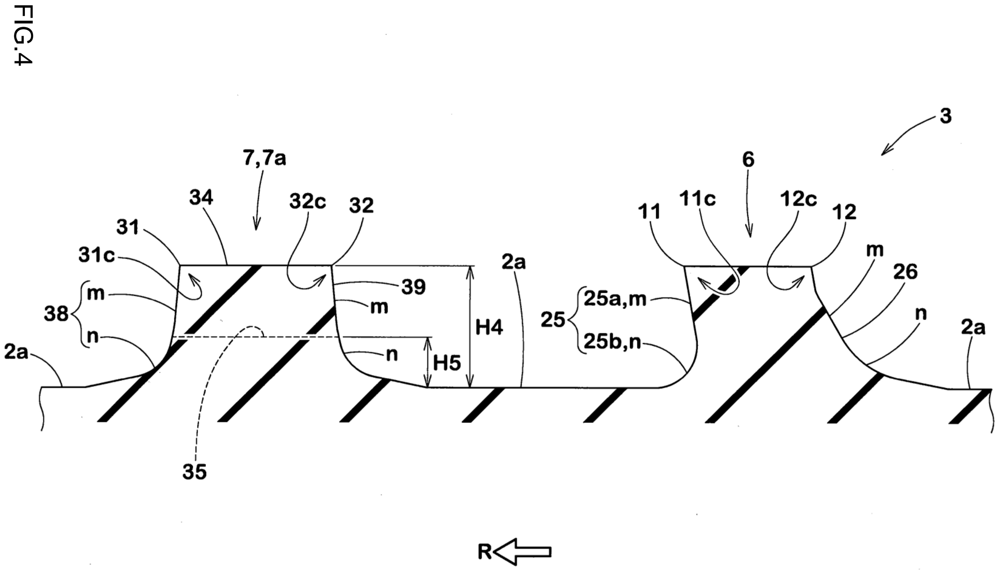

FIG. 4 is a cross-sectional view taken along B-B line of FIG. 3. As shown in FIG. 4, each of the first crown blocks 6 includes a heel-side wall surface 25 extending from the heel-side edge 11 to the tread reference surface (2a) and a toe-side wall surface 26 extending from the toe-side edge 12 to the tread reference surface (2a). The heel-side wall surface 25 includes a first wall surface portion (25a) extending to the toe-side in the rotational direction (R) from the heel-side edge 11 toward the tread reference surface (2a), and a second wall surface portion (25b) connected to the first wall surface portion (25a) and extending to the heel-side in the rotational direction (R) to the tread reference surface (2a). The toe-side wall surface 26 in the present embodiment extends to the toe-side in the rotational direction (R) continuously from the toe-side edge 12 to the tread reference surface (2a). In this way, each of the first crown blocks 6 has a corner portion (11c) of the heel-side edge 11 formed as an acute angle, and a corner portion (12c) of the toe-side edge 12 formed as an obtuse angle. It is possible that the first crown blocks 6 configured as such increase the amount of mud on the road surface scratched by the heel-side wall surfaces 25. The first wall surface portion (25a) of each of the first crown blocks 6 includes a linear portion (m) extending linearly, for example. The second wall surface portion (25b) of each of the first crown blocks 6 includes an arc portion (n) extending in an arc shape. The toe-side wall surface 26 includes a linear portion (m) and an arc portion (n).

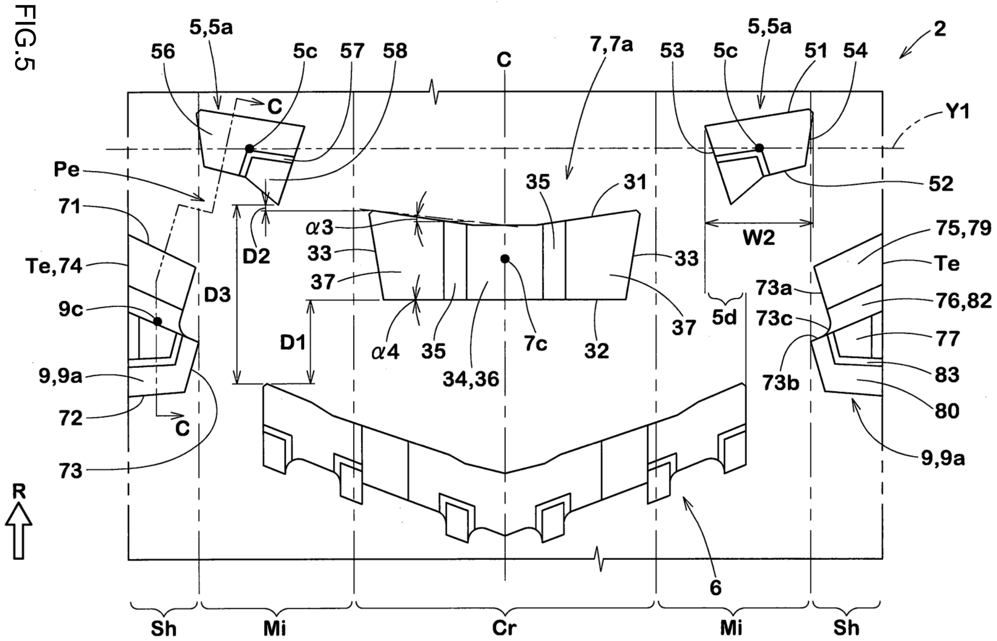

FIG. 5 is an enlarged view of FIG. 1. As shown in FIG. 5, each of the second crown blocks 7 includes a heel-side edge 31, a toe-side edge 32, and a pair of joint edges 33. The heel-side edge 31 has a V-shape that is inclined to the heel-side in the rotational direction (R) as it goes from the center toward both outer sides in the tire axial direction, for example. The toe-side edge 32 extends linearly in the tire axial direction, for example. In the present embodiment, the toe-side edge 32 extends continuously in parallel with the tire axial direction. Each of the joint edges 33 extends linearly, for example. Each of the joint edges 33 is continuously inclined to the heel-side in the rotational direction (R) as it goes toward the outer side in the tire axial direction. Further, the second ground contacting surface shape (7a) in the present embodiment has a center of gravity (7c) located on the tire equator (C).

Each of an angle (α3) of the heel-side edge 31 with respect to the tire axial direction and an angle (α4) of the toe-side edge 32 with respect to the tire axial direction is formed to be smaller than 10 degrees, for example. Since the second crown blocks 7 configured as such have high lateral rigidity, therefore, it is possible that the slide control performance is maintained high. The angle (α3) is in the range from 4 to 8 degrees on both axial sides of the V-shape, for example. The angle (α4) is zero degrees, for example.

As shown in FIG. 4 or FIG. 5, the second ground contacting surface shape (7a) of each of the second crown blocks 7 includes a fourth ground contacting surface portion 34 having a fourth protruding height (H4) and a fifth ground contacting surface portion 35 having a fifth protruding height (H5) that is smaller than the fourth protruding height (H4). The fourth ground contacting surface portion 34 includes a central portion 36 located at the tire equator (C) and a pair of outer portions 37 located on both sides of the central portion 36 in the tire axial direction. The fifth ground contacting surface portion 35 is disposed between the central portion 36 and each of the outer portions 37. In the tread development view, the central portion 36, each of the outer portions 37, and the fifth ground contacting surface portion 35 are each formed in a quadrangular shape.

The fourth protruding height (H4) is the same as the first protruding height (H1) in the present embodiment. A difference (H4-H5) between the fourth protruding height (H4) and the fifth protruding height (H5) is preferably 3 mm or more, more preferably 4 mm or more, and is preferably 9 mm or less, and even more preferably 8 mm or less. The second crown blocks 7 configured as such ensure the shearing force at the fourth ground contacting surface portion 34 while suppressing the decrease in the lateral rigidity. As an example, the difference (H4-H5) between the fourth protruding height (H4) and the fifth protruding height (H5) is preferably in the range from 3 to 9 mm, and more preferably in the range from 4 to 8 mm.

A maximum length (WC) (shown in FIG. 1) of each of the second crown blocks 7 is preferably 50% or more, more preferably 55% or more, and is preferably 70% or less, and even more preferably 65% or less of the maximum length (W1) of each of the first crown blocks 6 (shown in FIG. 1). The second crown blocks 7 configured as such have an appropriate degree of the lateral rigidity, and therefore are useful in suppressing large decrease in the slide control performance during cornering while improving the traction performance. As an example, the maximum length (WC) of each of the second crown blocks 7 is preferably in the range from 50% to 70%, and more preferably in the range from 55% to 65% of the maximum length (W1) of each of the first crown blocks 6.

Each of the second crown blocks 7 includes a heel-side wall surface 38 extending from the heel-side edge 31 to the tread reference surface (2a) and a toe-side wall surface 39 extending from the toe-side edge 32 to the tread reference surface (2a), for example. The heel-side wall surface 38 in the present embodiment is continuously inclined to the heel-side in the rotational direction (R) as it goes from the heel-side edge 31 to the tread reference surface (2a). The toe-side wall surface 39 in the present embodiment is continuously inclined to the toe-side in the rotational direction (R) as it goes from the toe-side edge 32 to the tread reference surface (2a). In each of the second crown blocks 7, a corner portion (31c) of the heel-side edge 31 and a corner portion (32c) of the toe-side edge 32 are each formed as an obtuse angle. Each of the heel-side wall surface 38 and the toe-side wall surface 39 includes a linear portion (m) and an arc portion (n) in the present embodiment.

Each of the middle regions (Mi) is provided with the middle blocks 5. The middle blocks 5 of one of the middle regions (Mi) are arranged at the same positions in the tire circumferential direction as the middle blocks of the other of the middle regions (Mi). The centers of gravity (5c) of the ground contacting surfaces (5a) of corresponding middle blocks 5 of both middle regions (Mi) are located on a respective one of tire axial direction lines (Y1). In other words, in each pair of the middle blocks 5 arranged at the same circumferential position, the center of gravity (5c) of one middle block 5 of the pair is aligned on one of the tire axial direction lines (Y1) with the center of gravity (5c) of the other middle block 5 of the pair. The middle blocks 5 include overlapping portions (5d) that overlap with the first crown blocks 6 in the tire axial direction, for example. Further, the middle blocks 5 are spaced apart from the second crown blocks 7 in the tire axial direction.

As shown in FIG. 1 or FIG. 5, each of the middle blocks 5 is located closer to a respective one of the second crown blocks 7 than to a respective one of the first crown blocks 6 in the tire circumferential direction. In this way, the middle blocks 5 are located near the second crown blocks 7 each having the maximum length (WC) in the tire axial direction smaller than that of the first ground contacting surface shape (6a). Therefore, when the second crown blocks 7 touch the ground, the middle blocks 5 exert the effect of increasing the shearing force during cornering while the second crown blocks 7 ensuring ease of roll control during cornering.

Further, in each pair (Pe) of one of the middle blocks 5 and one of the second crown blocks 7 adjacent to each other in the tire circumferential direction, the middle block 5 of the pair (Pe) and the second crown block 7 of the pair (Pe) are spaced apart in the tire circumferential direction. As a result, a large shearing force is exerted during cornering by edges (inner joint edges 53) located on the inner side in the tire axial direction of the middle blocks 5, thereby, degradation of the slide control performance is further suppressed. It should be noted that the first crown blocks 6, the second crown blocks 7, and the middle blocks 5 in the present embodiment are spaced apart from one another in the tire circumferential direction.

In each pair (Pe), it is preferred that the center of gravity (5c) of the ground contacting surface (5a) of the middle block 5 of the pair (Pe) is located on the heel-side in the rotational direction (R) of the center of gravity (7c) of the ground contacting surface of the second crown block 7 of the pair (Pe). This makes it easier for the second crown blocks 7 and the middle blocks 5 to be displaced in the tire circumferential direction, and enhances the edge effect of the edges 53 located on the axially inner sides of the middle blocks 5, thereby, the slide control performance is maintained high.

In each trio (Tr) (shown in FIG. 1) of one of the pairs (Pe) and one of the first crown blocks 6 adjacent to the one of the pairs (Pe) on the toe-side in the rotational direction (R), it is preferred that a separation distance D2 (second separation distance) is 1.0 times or less a separation distance D1 (first separation distance) (shown in FIG. 5). The separation distance D2 is a separation distance in the tire circumferential direction from the second crown block 7 of the one of the pairs (Pe) to the middle block 5 of the one of the pairs (Pe). The separation distance D1 is a separation distance in the tire circumferential direction from the second crown block 7 of the one of the pairs (Pe) to the first crown block 6 adjacent to the one of the pairs (Pe) on the toe-side in the rotational direction (R). If a separation distance D3 (third separation distance) in the tire circumferential direction from the first crown block 6 of the each trio (Tr) to the middle block 5 of the each trio (Tr) remains unchanged, when the separation distance D2 exceeds 1.0 times the separation distance D1, the separation distance D1 becomes smaller, and the amount of mud scratched by the first crown blocks 6 is reduced. This may prevent improvements in the traction performance. Therefore, the separation distance D2 is more preferably 0.8 times or less, even more preferably 0.5 times or less, and further preferably 0.2 times or less the separation distance D1. Although not particularly limited, the separation distance D2 is preferably 0.01 times or more, and more preferably 0.03 times or more the separation distance D1. In the present embodiment, the second crown blocks 7 and the middle blocks 5 do not overlap in the tire circumferential direction. As an example, the separation distance D2 is preferably in the range from 0.01 to 0.5 times, and more preferably in the range from 0.03 to 0.2 times the separation distance D1.

Furthermore, if the separation distance D2 in each of the pairs (Pe) of the present embodiment becomes excessively large, the lateral rigidity of the tread portion 2 decreases, and thus it may become impossible to suppress a decrease in the slide control performance. For this reason, the separation distance D2 is preferably smaller than a separation distance (Da) (fourth separation distance) (shown in FIG. 1) in the tire circumferential direction from the middle block 5 of the one of the pairs (Pe) to one of the first crown blocks 6 adjacent to the middle block 5 of the one of the pairs (Pe) on the heel-side in the rotational direction (R), more preferably the separation distance D2 is 5 mm or less, and even more preferably 3 mm or less.

Each of the middle blocks 5 in the present embodiment includes a heel-side edge 51, a toe-side edge 52, an inner joint edge 53, and an outer joint edge 54. The heel-side edge 51 is inclined to the heel-side in the rotational direction (R) as it goes from the tire equator (C) side toward a respective one of the tread edges (Te) side, i.e., as it goes axially outward, for example. The toe-side edge 52 is inclined continuously to the heel-side in the rotational direction (R) as it goes from the tire equator (C) side toward a respective one of the tread edges (Te) side, i.e., as it goes axially outward. The inner joint edge 53 is inclined continuously to the toe-side in the rotational direction (R) as it goes from the tire equator (C) side to a respective one of the tread edges (Te) side, i.e., as it goes axially outward. The inner joint edge 53 configured as such exerts a large shearing force. The outer joint edge 54 is inclined continuously to the heel-side in the rotational direction (R) as it goes from the tire equator (C) side toward a respective one of the tread edges (Te) side, i.e., as it goes axially outward.

It is preferred that an angle (α5) (shown in FIG. 1) of the heel-side edge 51 with respect to the tire axial direction is smaller than the angle (α1) (shown in FIG. 1) of the heel-side edge 11 of the first ground contacting surface shape (6a). The heel-side edges 51 configured as such help to prevent the traction performance from becoming excessively large and maintain the slide control performance high. In order to maintain the slide control performance while improving the traction performance, a difference (α1-α5) between the angle (α1) and the angle α5 is preferably 5 degrees or more, more preferably 10 degrees or more, and is preferably 25 degrees or less, and even more preferably 20 degrees or less. As an example, the difference (α1-α5) between the angle (α1) and the angle (α5) is preferably in the range from 5 to 25 degrees, and more preferably in the range from 10 to 20 degrees.

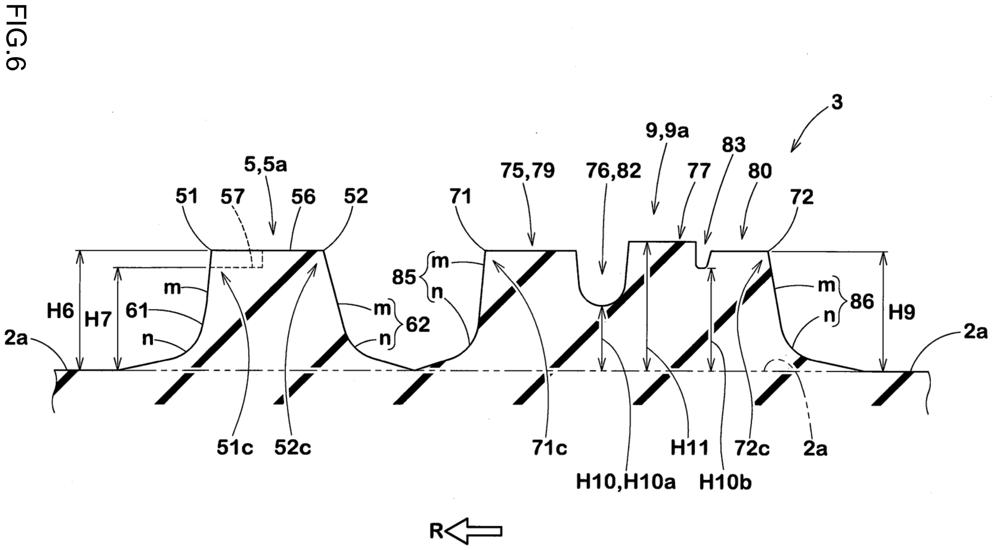

FIG. 6 is a cross-sectional view taken along C-C line of FIG. 5. As shown in FIG. 5 or FIG. 6, the ground contacting surface (5a) of each of the middle blocks 5 includes a sixth ground contacting surface portion 56 having a sixth protruding height (H6), a seventh ground contacting surface portion 57 having a seventh protruding height (H7), and an eighth ground contacting surface portion 58 having an eighth protruding height (H8) (shown in FIG. 2). The seventh protruding height (H7) is smaller than the sixth protruding height (H6). The eighth protruding height (H8) is greater than the sixth protruding height (H6). The sixth ground contacting surface portion 56 includes the heel-side edge 51 and the outer joint edge 54 and is formed in an L-shape in the tread development view. The seventh ground contacting surface portion 57 is connected to the sixth ground contacting surface portion 56 on the toe-side in the rotational direction (R) and is formed in an L-shape in the tread development view. The eighth ground contacting surface portion 58 is arranged adjacently to the seventh ground contacting surface portion 57 on the toe-side in the rotational direction (R) and on the tire equator (C) side, and is formed in a rectangular shape in the tread development view.

The sixth protruding height (H6) in the present embodiment is substantially the same as the first protruding height (H1). A difference (H6-H7) between the sixth protruding height (H6) and the seventh protruding height (H7) is substantially the same as the difference (H1-H2b) between the first protruding height (H1) and the second protruding height (H2b) of the second portions 22. A difference (H8-H6) between the eighth protruding height (H8) and the sixth protruding height (H6) is substantially the same as the difference (H3-H1) between the first protruding height (H1) and the third protruding height (H3).

Each of the middle blocks 5 is formed to have a maximum length (W2) in the tire axial direction smaller than the maximum length (W1) (shown in FIG. 3) of each of the first crown blocks 6. The maximum length (W2) of each of the middle blocks 5 is preferably 15% or more, more preferably 20% or more, and is preferably 30% or less, and more preferably 25% or less of the maximum length (W1) of each of the first crown blocks 6. The maximum length (W2) is formed by the heel-side edge 51 in each of the middle blocks 5. It is possible that the middle blocks 5 configured as such obtain a large shearing force and maintain high slide control performance. As an example, the maximum length (W2) of each of the middle blocks 5 is preferably in the range from 15% to 30%, and more preferably in the range from 20% to 25% of the maximum length (W1) of each of the first crown blocks 6.

Each of the middle blocks 5 includes a heel-side wall surface 61 extending from the heel-side edge 51 to the tread reference surface (2a) and a toe-side wall surface 62 extending from the toe-side edge 52 to the tread reference surface (2a), for example. The heel-side wall surface 61 in the present embodiment is continuously inclined to the heel-side in the rotational direction (R) as it goes from the heel-side edge 51 to the tread reference surface (2a). The toe-side wall surface 62 in the present embodiment is continuously inclined to the toe-side in the rotational direction (R) as it goes from the toe-side edge 52 to the tread reference surface (2a). Each of the middle blocks 5 has a corner portion (51c) of the heel-side edge 51 and a corner portion (52c) of the toe-side edge 52, and the corner portion (51c) and the corner portion (52c) are both formed as obtuse angles. Each of the heel-side wall surface 61 and the toe-side wall surface 62 includes the linear portion (m) and the arc portion (n) in the present embodiment.

As shown in FIG. 1 or FIG. 5, the blocks 3 further include a pair of the shoulder blocks 9 each arranged axially outside a respective one of the middle blocks 5. Each of the shoulder blocks 9 has a ground contacting surface (9a) and a center of gravity (9c) of the ground contacting surface (9a) of each of the shoulder blocks 9 is located in a respective one of the shoulder regions (Sh).

The tread portion 2 in the present embodiment has an axisymmetric shape with the tire equator (C) as the axis of symmetry. However, it should be noted that the tread portion 2 is not limited to such an embodiment.

As shown in FIG. 1 or FIG. 5, each of the shoulder regions (Sh) is provided with the shoulder blocks 9. The shoulder blocks 9 in both shoulder regions (Sh) are provided at the same positions in the tire circumferential direction. In other words, the shoulder blocks 9 in one of the shoulder regions (Sh) are formed at the same positions in the tire circumferential direction as the shoulder blocks 9 in the other one of the shoulder regions (Sh). The centers of gravity (9c) of the ground contacting surfaces (9a) of corresponding shoulder blocks 9 of both shoulder regions (Sh) are located on a respective one of tire axial direction lines (Y2). In other words, in each pair of the shoulder blocks 9 located at the same position in the tire circumferential direction, the centers of gravity (9c) of the shoulder blocks 9 in the pair are located on the same tire axial direction line (Y2).

Each of the shoulder blocks 9 includes a first overlapping portion (K1) that overlaps with one of the first crown blocks 6 in the tire circumferential direction, and a second overlapping portion (K2) that overlaps with one of the second crown blocks 7 in the tire circumferential direction. The shoulder blocks 9 configured as such appropriately increase the lateral rigidity of the tire 1, and thus are useful for maintaining the slide control performance high.

Each of the shoulder blocks 9 includes a heel-side edge 71, a toe-side edge 72, an inner joint edge 73, and an outer joint edge 74. The heel-side edge 71 and the toe-side edge 72 extend linearly in the tire axial direction, for example. The heel-side edge 71 in the present embodiment is inclined continuously to the heel-side in the rotational direction (R) as it goes from the tire equator (C) side toward a respective one of the tread edges (Te) side, i.e., as it goes axially outward. The toe-side edge 72 in the present embodiment is continuously inclined to the toe-side in the rotational direction (R) as it goes from the tire equator (C) side toward a respective one of the tread edges (Te) side, i.e., as it goes axially outward. The inner joint edge 73 includes a first edge portion (73a) extending from an axially inner end of the heel-side edge 71, a second edge portion (73b) extending from an axially inner end of the toe-side edge 72, and a third edge portion (73c) extending from the first edge portion (73a) to the second edge portion (73b) so as to connect them. The first edge portion (73a) and the second edge portion (73b) are continuously inclined to the toe-side in the rotational direction (R) as they go from the tire equator (C) side toward a respective one of the tread edges (Te) side, i.e., as they go axially outward. The third edge portion (73c) extends in an arc shape convex to the toe-side in the rotational direction (R) (and axially outward in the present embodiment). The outer joint edge 74 overlaps with a respective one of the tread edges (Te). In the present embodiment, the outer joint edge 74 coincide over the entire length thereof with a respective one of the tread edges (Te).

As shown in FIG. 5 or FIG. 6, the ground contacting surface (9a) of each of the shoulder blocks 9 includes a ninth ground contacting surface portion 75 having a ninth protruding height (H9), a tenth ground contacting surface portion 76 having a tenth protruding height (H10), and an eleventh ground contacting surface portion 77 having an eleventh protruding height (H11). The tenth protruding height (H10) is smaller than the ninth protruding height (H9). The eleventh protruding height (H11) is greater than the ninth protruding height (H9). The ninth ground contacting surface portion 75 includes a heel-side portion 79 located on the heel-side in the rotational direction (R) and a toe-side portion 80 located on the toe-side in the rotational direction (R) of the heel-side portion 79. The heel-side portion 79 is formed in a rectangular shape in the tread development view. The toe-side portion 80 is formed in an L-shape in the tread development view. The eleventh ground contacting surface portion 77 is located between the heel-side portion 79 and the toe-side portion 80. The eleventh ground contacting surface portion 77 is formed in a rectangular shape in the tread development view. The tenth ground contacting surface portion 76 includes a first portion 82 located between the heel-side portion 79 and the eleventh ground contacting surface portion 77, and a second portion 83 located between the toe-side portion 80 and the eleventh ground contacting surface portion 77. The first portion 82 has a tenth protruding height (H10a) smaller than a tenth protruding height (H10b) of the second portion 83. The first portion 82 is formed in a rectangular shape in the tread development view. The second portion 83 is formed in an L-shape in the tread development view.

The ninth protruding height (H9) in the present embodiment is substantially the same as the first protruding height (H1). A difference (H9-H10a) between the ninth protruding height (H9) and the tenth protruding height (H10a) of the first portion 82 is substantially the same as the difference (H4-H5) between the fourth protruding height (H4) and the fifth protruding height (H5). A difference (H9-H10b) between the ninth protruding height (H9) and the tenth protruding height (H10b) of the second portion 83 is substantially the same as the difference (H1-H2b) between the first protruding height (H1) and the second protruding height (H2b) of the second portions 22. A difference (H11-H9) between the eleventh protruding height (H11) and the ninth protruding height (H9) is substantially the same as the difference (H3-H1) between the first protruding height (H1) and the third protruding height (H3).

Each of the shoulder blocks 9 includes a heel-side wall surface 85 extending from the heel-side edge 71 to the tread reference surface (2a) and a toe-side wall surface 86 extending from the toe-side edge 72 to the tread reference surface (2a), for example. The heel-side wall surface 85 in the present embodiment is continuously inclined to the heel-side in the rotational direction (R) as it goes from the heel-side edge 71 to the tread reference surface (2a). The toe-side wall surface 86 in the present embodiment is continuously inclined to the toe-side in the rotational direction (R) as it goes from the toe-side edge 72 to the tread reference surface (2a). In each of the shoulder blocks 9, the heel-side edge 71 has a corner portion (71c) and the toe-side edge 72 has a corner portion (72c), and the corner portion (71c) and the corner portion (72c) are each formed as an obtuse angle. Each of the heel-side wall surface 85 and the toe-side wall surface 86 includes the linear portion (m) and the arc portion (n) in the present embodiment.

As shown in FIG. 4 or FIG. 6, in the cross sections of the blocks 3, only the corner portions (11c) of the heel-side edges 11 of the first crown blocks 6 are each formed as an acute angle. The corner portions (11c) configured as such help to increase the amount of scratched mud. On the other hand, the corner portions (12c) of the toe-side edges 12 of the first crown blocks 6 are each formed as an obtuse angle. In addition, the corner portions (31c), (51c), (71c) of the heel-side edges 31, 51, 71 and the corner portions (32c), (52c), (72c) of the toe-side edges 32, 52, 72 of the second crown blocks 7, the middle blocks 5, and the shoulder blocks 9 are obtuse angles. Thereby, it is possible that the rigidity of each of the blocks 6, 7, 5, and 9 is increased.

As shown in FIG. 2, the tire 1 of the present embodiment includes a tread rubber (Tg) that includes the blocks 3. The tread rubber (Tg) has a rubber hardness of preferably 50 or more, more preferably 70 or more, and preferably 80 or less, and even more preferably 78 or less, at 25 degrees Celsius. As an example, the rubber hardness of the tread rubber (Tg) at 25 degrees Celsius is preferably in the range from 50 to 80, and more preferably in the range from 70 to 78. The rubber hardness is measured in accordance with Japanese Industrial Standards JIS-K6253 by using a type-A durometer at 25 degrees Celsius.

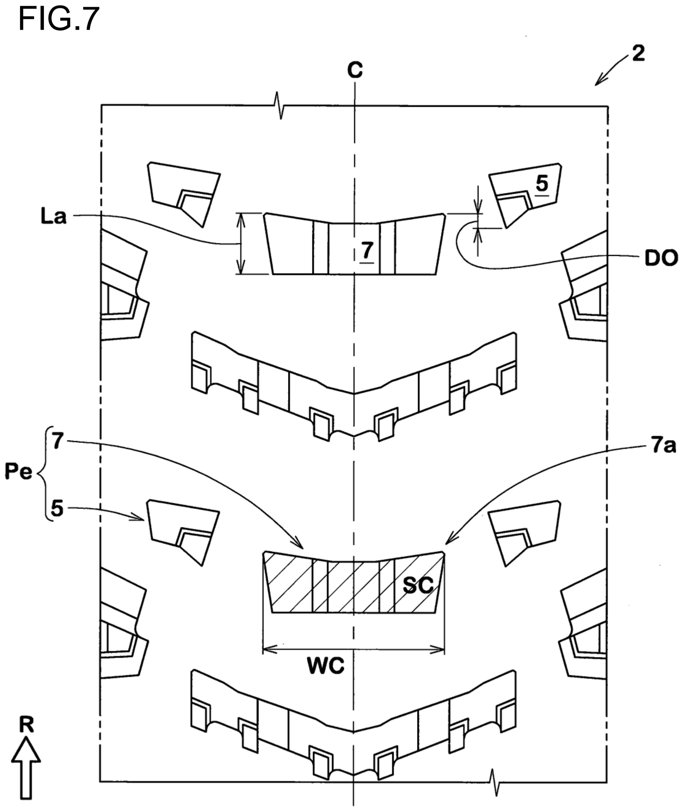

FIG. 7 is a tread development view of the tread portion 2 according to another embodiment. As shown in FIG. 7, in each pair (Pe), the middle block 5 and the second crown block 7 may overlap in the tire circumferential direction. A longitudinal length (LC) (not shown) of each of the second crown blocks 7 is determined by dividing a ground contacting surface area (SC) of each of the second crown blocks 7 by the maximum length (WC) of the each of the second crown blocks 7, that is, determined as a division SC/WC. In this case, an overlap distance (DO) (circumferential distance) in the tire circumferential direction between the middle block 5 and the second crown block 7 in each pair (Pe) is preferably 0.5 times or less, more preferably 0.3 times or less the longitudinal length (LC). The ground contacting surface area (SC) is the area of the second ground contacting surface shape (7a). Since the overlap distance DO is 0.5 times or less the longitudinal length (LC), the edge effect of the middle blocks 5 is exerted during cornering, therefore, it is possible that the slide control performance is maintained high. It should be noted that the longitudinal length (LC) is smaller than a maximum length (La) in the tire circumferential direction of each of the second crown blocks 7.

While detailed description has been made of the present invention according to especially preferred embodiments, the present invention can be embodied in various forms without being limited to the illustrated embodiments and modifications.

### [Examples]

Motorcycle tires having the basic tread pattern shown in FIG. 1 were made by way of test according to the specifications in Table 1. The traction performance and the slide control performance during cornering were tested by Using the test tires. The common specifications of the test tires and the test methods are as follows.

### < Common Specification >

Tire size: 140/80-18
Tire rim size: 2.15x18
Tire inner pressure: 80 kPa
Carcass structure: bias
Test vehicle: vehicle with a 450cc four-stroke engine
Test course: muddy off-road course
Total number of Crown blocks: Same number for both References and Examples

### < Traction Performance and Slide Control Performance during Cornering >

A test rider drove the test vehicle with each test tire mounted on the rear wheel on the test course and the test rider evaluated the traction performance and the slide control performance during cornering by the test rider's senses. The results are shown on a 10-point scale.

The test results are shown in Table 1.

**Table 1**

| | Ref. 1 | Ref. 2 | EX. 1 | EX. 2 | EX. 3 | EX. 4 | EX. 5 | EX. 6 |
|---|---|---|---|---|---|---|---|---|
| Total Number of First Crown Blocks/ Total Number of Crown Blocks [%] | 0 | 50 | 30 | 50 | 50 | 50 | 50 | 50 |
| Angle α1 [degree] | 20 | 0 | 20 | 20 | 20 | 20 | 20 | 20 |
| Angle α5 [degree] | 0 | 0 | 0 | 0 | 0 | 0 | 10 | 5 |
| Maximum Length (W1) / Tread Width (TW) [%] | 65 | 65 | 65 | 65 | 60 | 70 | 65 | 65 |
| Traction Performance | 3 | 4 | 5 | 6 | 5 | 7 | 7 | 7 |
| [10-point scale; larger is better] | | | | | | | | |
| Slide Control Performance | 6 | 4 | 5 | 5 | 5 | 5 | 7 | 6 |
| [10-point scale; larger is better] | | | | | | | | |

From the test results, it was confirmed that the motorcycle tires in the Examples suppressed large decrease in the slide control performance and improved the traction performance compared to the motorcycle tires in the References.

### [Statement of Invention]

The present invention includes the following aspects.

### [Present Invention 1]

A motorcycle tire for running on rough terrain including:
a tread portion bound with an intended tire rotational direction, wherein
in a tread development view, the tread portion includes a pair of tread edges, a tread width, a crown region, a pair of shoulder regions, a pair of middle regions, and a plurality of blocks,
the tread width is a distance in a tire axial direction from one of the tread edges to the other of the tread edges,
the crown region is an area extending over 40% of the tread width with an axial center thereof at the tire equator,
each of the shoulder regions is an area extending over 10% of the tread width from a respective one of the tread edges,
each of the middle regions is an area demarcated between the crown region (Cr) and a respective one of the shoulder regions,
the blocks include a plurality of crown blocks each having a center of gravity of a ground contacting surface thereof located in the crown region, and a plurality of middle blocs each having a center of gravity of a ground contacting surface thereof located in a respective one of the middle regions,
the crown blocks include a plurality of first crown blocks each having a first ground contacting surface shape and a plurality of second crown blocks each having a second ground contacting surface shape,
the first ground contacting surface shape has a V-shape in which at least a heel-side edge thereof on a heel-side in the tire rotational direction is inclined to the heel-side in the tire rotational direction as it goes from a center thereof in the tire axial direction toward both outer sides thereof in the tire axial direction,
the second ground contacting surface shape has a maximum length (WC) in the tire axial direction smaller than a maximum length (W1) in the tire axial direction of the first ground contacting surface shape,
a total number of the first crown blocks is in the range from 30% to 70% of a total number of the crown blocks, and
the heel-side edge of the first ground contacting surface shape is inclined at an angle in the range of 10 to 45 degrees with respect to the tire axial direction.

### [Present Invention 2]

The motorcycle tire according to Present Invention 1, wherein
the ground contacting surface of each of the middle blocks includes a heel-side edge on the heel-side in the tire rotational direction, and
the heel-side edge of each of the middle blocks has an angle smaller than the angle of the heel-side edge of the first ground contacting surface shape with respect to the tire axial direction.

### [Present Invention 3]

The motorcycle tire according to Present Invention 1 or 2, wherein the maximum length (W1) in the tire axial direction of the first ground contacting surface shape is in the range from 60% to 70% of the tread width.

### [Present Invention 4]

The motorcycle tire according to any one of Present Inventions 1 to 3 further including a tread rubber forming the blocks, wherein the tread rubber has a rubber hardness in the range from 50 to 80 at 25 degrees Celsius.

### [Present Invention 5]

The motorcycle tire according to any one of Present Inventions 1 to 4, wherein each of the middle blocks is located closer to a respective one of the second crown blocks than to a respective one of the first crown blocks in the tire circumferential direction.

### [Present Invention 6]

The motorcycle tire according to any one of Present Inventions 1 to 5, wherein in each pair of one of the middle blocks and one of the second crown blocks adjacent to each other in the tire circumferential direction, the middle block of the pair and the second crown block of the pair are spaced apart in the tire circumferential direction.

### [Present Invention 7]

The motorcycle tire according to any one of Present Inventions 1 to 5, wherein
each of the second crown blocks has a ground contacting surface area (SC) and a longitudinal length (LC) determined as a division SC/WC obtained by dividing the ground contacting surface area (SC) by the maximum length (WC) of the second ground contacting surface shape, and
in each pair of one of the middle blocks and one of the second crown blocks adjacent to each other in the tire circumferential direction, an overlap distance (DO) in the tire circumferential direction between the middle block of the pair and the second crown block of the pair is 0.5 times or less the longitudinal length (LC).

### [Present Invention 8]

The motorcycle tire according to any one of Present Inventions 1 to 7, wherein in each pair of one of the middle blocks and one of the second crown blocks adjacent to each other in the tire circumferential direction, the center of gravity of the middle block of the pair is located on the heel-side in the tire rotational direction of a center of gravity of a ground contacting surface of the second crown block of the pair.

### [Present Invention 9]

The motorcycle tire according to any one of Present Inventions 1 to 8, wherein
the blocks include pairs each consisting of one of the middle blocks and one of the second crown blocks adjacent to each other in the tire circumferential direction, and trios each consisting of one of the pairs and one of the first crown blocks adjacent to the one of the pairs on a toe-side in the tire rotational direction, and
in each trio of the trios, the first crown block of the trio, the second crown block of the trio, and the middle block of the trio are spaced apart from each other in the tire circumferential direction.

### [Present Invention 10]

The motorcycle tire according to any one of Present Inventions 1 to 9, wherein
a second separation distance (D2) is 1.0 times or less a first separation distance (D1) in each trio,
the first separation distance (D1) is a distance in the tire circumferential direction from the first crown block of the trio to the second crown block of the trio, and
the second separation distance (D2) is a distance in the tire circumferential direction from the second crown block of the trio to the middle block of the trio.

### [Present Invention 11]

The motorcycle tire according to any one of Present Inventions 1 to 10, wherein
the first ground contacting surface shape includes first ground contacting surface portions having a first protruding height and second ground contacting surface portions having a second protruding height,
the first ground contacting surface portions include a pair of outer portions located at both axial ends of the first ground contacting surface shape, and
the second ground contacting surface portions include a plurality of third portions each connected to a respective one of the outer portions and formed in an L-shape in the tread development view.

### [Present Invention 12]

The motorcycle tire according to Present Invention 11, wherein each of the third portions is arranged on a toe-side in the tire rotational direction of a respective one of the outer portions.

### [Present Invention 13]

The motorcycle tire according to Present Invention 11 or 12, wherein
the first ground contacting surface shape includes third ground contacting surface portions having a third protruding height greater than the first protruding height, and a toe-side edge on a toe-side in the tire rotational direction,
each of the third ground contacting surface portions protrudes to the toe-side in the tire rotational direction from a virtual linear line,
the virtual linear line is a linear line connecting an intersection point and a second point,
the intersection point is an intersection of the toe-side edge with a tire circumferential direction line passing through a center of gravity of the first ground contacting surface shape, and
the second point is a point on the toe-side edge where an angle of the toe-side edge is largest with respect to the tire axial direction.

### [Present Invention 14]

The motorcycle tire according to Present Invention 13, wherein each of the third portions is connected to a respective one of the third ground contacting surface portions.

### [Present Invention 15]

The motorcycle tire according to any one of Present Inventions 1 to 14, wherein
each of the middle regions is provided with the middle blocks, and
the middle blocks of one of the middle regions are arranged at the same positions in the tire circumferential direction as the middle blocks of the other of the middle regions.

### [Present Invention 16]

The motorcycle tire according to any one of Present Inventions 1 to 15, wherein
the ground contacting surface of each of the middle blocks includes a sixth ground contacting surface portion having a sixth protruding height and a seventh ground contacting surface portion having a seventh protruding height smaller than the sixth protruding height, and
the seventh ground contacting surface portion is connected to the sixth ground contacting surface portion on a toe-side in the tire rotational direction.

### [Present Invention 17]

The motorcycle tire according to Present Invention 16, wherein the sixth ground contacting surface portion is formed in an L-shape in the tread development view.

### [Present Invention 18]

The motorcycle tire according to Present Invention 16 or 17, wherein the seventh ground contacting surface portion is formed in an L-shape in the tread development view.

### [Present Invention 19]

The motorcycle tire according to any one of Present Inventions 16 to 18, wherein
the ground contacting surface of each of the middle blocks further includes an eighth ground contacting surface portion having an eighth protruding height greater than the sixth protruding height, and
the eighth ground contacting surface portion is arranged on the toe-side in the rotational direction of the seventh ground contacting surface portion.

### [Present Invention 20]

The motorcycle tire according to Present Invention 19, wherein the eighth ground contacting surface portion is formed in a rectangular shape in the tread development view.

### [Description of Reference Signs]

- 1: motorcycle tire
- 2: tread portion
- 4: crown block
- 6: first crown block
- 6a: first ground contacting surface shape
- 7: second crown block
- 7a: second ground contacting surface shape
- 11: heel-side edge

## Claims

1. A motorcycle tire for running on rough terrain comprising:
a tread portion bound with an intended tire rotational direction, wherein
in a tread development view, the tread portion includes a pair of tread edges, a tread width, a crown region, a pair of shoulder regions, a pair of middle regions, and a plurality of blocks,
the tread width is a distance in a tire axial direction from one of the tread edges to the other of the tread edges,
the crown region is an area extending over 40% of the tread width with an axial center thereof at the tire equator,
each of the shoulder regions is an area extending over 10% of the tread width from a respective one of the tread edges,
each of the middle regions is an area demarcated between the crown region (Cr) and a respective one of the shoulder regions,
the blocks include a plurality of crown blocks each having a center of gravity of a ground contacting surface thereof located in the crown region, and a plurality of middle blocs each having a center of gravity of a ground contacting surface thereof located in a respective one of the middle regions,
the crown blocks include a plurality of first crown blocks each having a first ground contacting surface shape and a plurality of second crown blocks each having a second ground contacting surface shape,
the first ground contacting surface shape has a V-shape in which at least a heel-side edge thereof on a heel-side in the tire rotational direction is inclined to the heel-side in the tire rotational direction as it goes from a center thereof in the tire axial direction toward both outer sides thereof in the tire axial direction,
the second ground contacting surface shape has a maximum length (WC) in the tire axial direction smaller than a maximum length (W1) in the tire axial direction of the first ground contacting surface shape,
a total number of the first crown blocks is in the range from 30% to 70% of a total number of the crown blocks, and
the heel-side edge of the first ground contacting surface shape is inclined at an angle in the range of 10 to 45 degrees with respect to the tire axial direction.

2. The motorcycle tire according to claim 1, wherein
the ground contacting surface of each of the middle blocks includes a heel-side edge on the heel-side in the tire rotational direction, and
the heel-side edge of each of the middle blocks has an angle smaller than the angle of the heel-side edge of the first ground contacting surface shape with respect to the tire axial direction.

3. The motorcycle tire according to claim 1 or 2, wherein the maximum length (W1) in the tire axial direction of the first ground contacting surface shape is in the range from 60% to 70% of the tread width.

4. The motorcycle tire according to any one of claims 1 to 3 further comprising a tread rubber forming the blocks, wherein the tread rubber has a rubber hardness in the range from 50 to 80 at 25 degrees Celsius.

5. The motorcycle tire according to any one of claims 1 to 4, wherein each of the middle blocks is located closer to a respective one of the second crown blocks than to a respective one of the first crown blocks in the tire circumferential direction.

6. The motorcycle tire according to any one of claims 1 to 5, wherein in each pair of one of the middle blocks and one of the second crown blocks adjacent to each other in the tire circumferential direction, the middle block of the pair and the second crown block of the pair are spaced apart in the tire circumferential direction.

7. The motorcycle tire according to any one of claims 1 to 5, wherein
each of the second crown blocks has a ground contacting surface area (SC) and a longitudinal length (LC) determined as a division SC/WC obtained by dividing the ground contacting surface area (SC) by the maximum length (WC) of the second ground contacting surface shape, and
in each pair of one of the middle blocks and one of the second crown blocks adjacent to each other in the tire circumferential direction, an overlap distance (DO) in the tire circumferential direction between the middle block of the pair and the second crown block of the pair is 0.5 times or less the longitudinal length (LC).

8. The motorcycle tire according to any one of claims 1 to 7, wherein in each pair of one of the middle blocks and one of the second crown blocks adjacent to each other in the tire circumferential direction, the center of gravity of the middle block of the pair is located on the heel-side in the tire rotational direction of a center of gravity of a ground contacting surface of the second crown block of the pair.

9. The motorcycle tire according to any one of claims 1 to 8, wherein
the blocks include pairs each consisting of one of the middle blocks and one of the second crown blocks adjacent to each other in the tire circumferential direction, and trios each consisting of one of the pairs and one of the first crown blocks adjacent to the one of the pairs on a toe-side in the tire rotational direction, and
in each trio of the trios, the first crown block of the trio, the second crown block of the trio, and the middle block of the trio are spaced apart from each other in the tire circumferential direction.

10. The motorcycle tire according to any one of claims 1 to 9, wherein
a second separation distance (D2) is 1.0 times or less a first separation distance (D1) in each trio,
the first separation distance (D1) is a distance in the tire circumferential direction from the first crown block of the trio to the second crown block of the trio, and
the second separation distance (D2) is a distance in the tire circumferential direction from the second crown block of the trio to the middle block of the trio.

11. The motorcycle tire according to any one of claims 1 to 10, wherein
the first ground contacting surface shape includes first ground contacting surface portions having a first protruding height and second ground contacting surface portions having a second protruding height,
the first ground contacting surface portions include a pair of outer portions located at both axial ends of the first ground contacting surface shape, and
the second ground contacting surface portions include a plurality of third portions each connected to a respective one of the outer portions and formed in an L-shape in the tread development view.

12. The motorcycle tire according to claim 11, wherein each of the third portions is arranged on a toe-side in the tire rotational direction of a respective one of the outer portions.

13. The motorcycle tire according to claim 11 or 12, wherein
the first ground contacting surface shape includes third ground contacting surface portions having a third protruding height greater than the first protruding height, and a toe-side edge on a toe-side in the tire rotational direction,
each of the third ground contacting surface portions protrudes to the toe-side in the tire rotational direction from a virtual linear line,
the virtual linear line is a linear line connecting an intersection point and a second point,
the intersection point is an intersection of the toe-side edge with a tire circumferential direction line passing through a center of gravity of the first ground contacting surface shape, and
the second point is a point on the toe-side edge where an angle of the toe-side edge is largest with respect to the tire axial direction.

14. The motorcycle tire according to claim 13, wherein each of the third portions is connected to a respective one of the third ground contacting surface portions.

15. The motorcycle tire according to any one of claims 1 to 14, wherein
each of the middle regions is provided with the middle blocks, and
the middle blocks of one of the middle regions are arranged at the same positions in the tire circumferential direction as the middle blocks of the other of the middle regions.
